# EUROPÄISCHE PATENTSCHRIFT

(11) **EP 1 384 825 B1**
(45) Veröffentlichungstag und Bekanntmachung des Hinweises auf die Patenterteilung: **24.10.2007**
(21) Anmeldenummer: 03016133.5
(22) Anmeldetag: 16.07.2003
(51) Int. Cl.: E02F 3/38, E02F 9/08, B66C 23/80

(54) **Einrastmechanismus und Arbeitsfahrzeug mit einem Einrastmechanismus**
Catch device and working machine including a catch device
Verrou et engin de travaux public avec un verrou

(30) Priorität: 24.07.2002 US 202289
(43) Veröffentlichungstag der Anmeldung: 28.01.2004
(73) Patentinhaber: DEERE & COMPANY, Moline, Illinois 61265-8098 (US)
(72) Erfinder: States, Douglas Scott, Dubuque, IA 52002 (US); Mayer, Peter John, Cuba City, WI 53807 (US); Pfaff, Wylie Elton, Dubuque, IA 52001 (US); Knopp, Thomas Andrew, Dubuque, IA 52002 (US)
(74) Vertreter: Lau-Loskill, Philipp

(56) Entgegenhaltungen:
- CH-A- 129 231
- DE-A- 2 619 701
- GB-A- 990 182
- GB-A- 1 515 875
- US-A- 3 951 281
- US-A- 3 955 695
- US-A- 4 295 661
- US-A- 4 833 755
- US-A- 4 951 984
- US-A- 5 064 339
- US-A- 5 074 010

## Beschreibung

Die Erfindung betrifft einen Einrastmechanismus zum Einrasten zweier relativ zueinander bewegbarer Bauelemente, welche vorzugsweise in Form einer Dreh- oder Schwenkbewegung relativ zueinander bewegbar sind, mit einem ersten Teil und einem zweiten Teil, wobei einer der beiden Teile mit dem einen Bauelement und ein anderer der beiden Teile mit dem anderen Bauelement verbunden ist, wobei der erste Teil eine Aufnahme aufweist und wobei der zweite Teil ein Einrastelement mit einem Kopf und einem Schaft aufweist.

Weiterhin betrifft die vorliegende Erfindung ein Arbeitsfahrzeug mit einem Rahmen, einem Arm, einem Verstrebungsmittel und einem Einrastmechanismus, wobei der Arm zur Verrichtung einer Arbeitsfunktion vorgesehen ist, wobei der Arm ein erstes Ende und ein zweites Ende aufweist und das erste Ende des Arms schwenkbar an dem Rahmen befestigt ist, wobei der Arm in eine Arbeitsposition und eine Stauposition verbringbar ist, wobei das Verstrebungsmittel zum Abspreizen des Arms in eine Arbeitsposition vorgesehen ist, wobei das Verstrebungsmittel ein erstes und ein zweites Ende aufweist, wobei das erste Ende des Verstrebungsmittels mit dem Arm und das zweite Ende des Verstrebungsmittels mit dem Rahmen verbindbar ist, wobei der Einrastmechanismus zum Festhalten des Arms in der Stauposition vorgesehen ist und einen ersten und einen zweiten Teil aufweist, wobei einer der beiden Teile mit dem Rahmen und ein anderer der beiden Teile mit dem Arm verbunden ist, wobei der erste Teil des Einrastmechanismus eine Aufnahme aufweist und wobei der zweite Teil des Einrastmechanismus ein Einrastelement mit einem Kopf und einem Schaft aufweist.

Eine Vielzahl von Arbeitsmaschinen können mit Stabilisatorarmen ausgestattet sein, welche zur lateralen Stabilisierung des Arbeitsfahrzeugs bzw. der Maschine während des Betriebs dienen. Ein Tieflöffelbagger umfasst üblicherweise zwei Stabilisatorarme, die an dem Rahmen des Arbeitsfahrzeugs befestigt sind. Die Stabilisatorarme eines Tieflöffelbaggers sind über Gelenke mit horizontal angeordneter Drehachse bzw. Schwenkachse mit dem Rahmen verbunden und drehen bzw. schwenken relativ zum Rahmen um diese horizontale Achse. Lineare Stellglieder, beispielsweise in Form von hydraulischen Zylindern, steuern die Positionen der Stabilisatorarme.

Während des Betriebs der Arbeitsmaschine, wenn die Stabilisatorarme nicht in Benutzung sind, wenn das Arbeitsgerät beispielsweise von einer Baustelle zu einer anderen fährt, werden die Stabilisatorarme von den linearen Stellgliedern in eine Stauposition gebracht. Üblicherweise wird jeder Stabilisatorarm eines Tieflöffelbaggers lediglich von dem linearen Stellglied in seiner Stauposition gehalten. Wenn jedoch die Gravitationskraft auf den Stabilisatorarm gegen das lineare Stellglied wirkt, kann der Stabilisatorarm nach und nach absenken. Diese Absenkung des Stabilisatorarms aus seiner Stauposition ist zu vermeiden.

Eine Vielzahl von Einrastmechanismen wurden bei Tieflöffelbaggern verwendet, um ein Absenken der Stabilisatorarme aus der Stauposition zu vermeiden. Lediglich beispielhaft wird auf die US 3,951,281, US 3,955,695 und US 4, 295,661 verwiesen, aus denen Einrastmechanismen bekannt sind. Bei den aus diesen Druckschriften bekannten Einrastmechanismen verriegeln bzw. entriegeln die Einrastmechanismen automatisch, wenn der Stabilisatorarm aus der Stauposition heraus bzw. in die Stauposition hinein bewegt wird.

Aus der US 3,955,695 ist ein Einrastmechanismus bekannt. Der eine Teil des Einrastmechanismus weist eine Aufnahme auf, welche in Form eines ringförmigen elastomerischen Materials ausgebildet ist und welches eine kreisförmige Öffnung mit einem Durchmesser zur Verfügung stellt. Der andere Teil des Einrastmechanismus weist einen Kopf an einem Schaft auf, welcher einen größeren Durchmesser als den der kreisförmigen Öffnung aufweist. Zum Verriegeln bzw. zum Entriegeln muss der Kopf die kreisförmige Öffnung passieren. Hierbei ist jedoch der Verschleiß am elastomerischen Material sehr hoch, so dass die Aufnahme häufig auszuwechseln ist. Aus der GB-A-990,182 ist ein gattungsgemäßer Einrastmechanismus mit den Merkmalen des Oberbegriffs des Patentanspruchs 1 bekannt.

Die der Erfindung zugrunde liegende Aufgabe wird darin gesehen, einen Einrastmechanismus und ein Arbeitsgerät der eingangs genannten Art anzugeben und weiterzubilden, durch welche die vorgenannten Probleme überwunden werden. Insbesondere soll der Verschleiß der Bauteile des Einrastmechanismus verringert werden.

Die Aufgabe hinsichtlich des Einrastmechanismus wird erfindungsgemäß durch die Lehre des Patentanspruchs 1 gelöst.

Erfindungsgemäß ist ein Einrastmechanismus der eingangs genannten Art dadurch gekennzeichnet, dass die Aufnahme zwei im Wesentlichen parallel angeordnete Bauteile mit elastischem und/oder elastomerischem Material aufweist, welche zu einer Aufnahmeöffnung einer vorgebbaren Breite voneinander separierbar sind, wobei der Kopf größer als die Breite der Aufnahmeöffnung der Aufnahme ist, wobei der Kopf breiter als der Schaft ist und wobei die zwei Bauteile des Einrastmechanismus derart miteinander zusammenwirken, dass die zwei Bauteile das Einrastelement zurückhalten, wenn die Bauelemente sich in der Einrastposition befinden, und dass die zwei Bauteile sich deformieren, wenn das Einrastelement die Aufnahmeöffnung passiert, wenn die Bauelemente durch eine ausreichende Kraft in die Einrastposition hinein oder aus der Einrastposition heraus bringbar sind, was ein automatisches Einrasten und/oder Freigeben des Einrastmechanismus bewirkt.

In erfindungsgemäßer Weise ist zunächst erkannt worden, dass ein verringerter Verschleiß insbesondere der sich deformierenden Bauteile dadurch erzielt werden kann, dass anstelle einer ringförmigen Anordnung der Aufnahme eine Anordnung gewählt wird, bei der die Aufnahme durch zwei im Wesentlichen parallel angeordnete Bauteile mit elastischem Material vorgesehen ist. Hierdurch wird bei dem Verriegelungs- bzw. Entriegelungsvorgang keine ringförmige Öffnung der Aufnahme in radialer Richtung gedehnt, sondern die zwei im Wesentlichen parallel angeordneten Bauteile werden im Wesentlichen in einer Richtung deformiert, welche quer zur parallelen Anordnungsrichtung der zwei Bauteile zeigt. Insoweit wird hierdurch beim Verriegelungs- bzw. Entriegelungsvorgang nicht ein eine ringförmige Öffnung aufweisendes Bauteil gedehnt, wodurch sich beispielsweise Risse im Bauteil in radialer Richtung ausbilden können, sondern es wird in vorteilhafter Weise eine Deformation zweier Bauteile derart erzielt, dass die Bauteile voneinander wegbewegt werden.

In einer bevorzugten Ausführungsform sind die beiden Bauteile jeweils durch Rollen gebildet, welche drehbar bzw. rotierbar um eine Drehachse angeordnet sind. Hierdurch können beim Passieren des Kopfs des einen Teils des Einrastmechanismus durch die Aufnahme die zwei die Aufnahme bildenden Bauteile sich drehen, wodurch in vorteilhafter Weise ein Verschleiß an den zwei Bauteilen vermindert wird, welche aufgrund von Reibung entsteht. Somit entriegelt beziehungsweise verriegelt der erfindungsgemäße Einrastmechanismus im Wesentlichen gegen die Deformationskraft der zwei elastomerisch ausgebildeten Bauteile. Vorzugsweise ist die Drehachse hierbei in Form eines Achsbolzens ausgeführt ist.

In einer ganz besonders bevorzugten Ausführungsform weist eine Rolle ein Mittelteil aus einem Elastomermaterial auf, welches von mindestens einem inneren und von mindestens einem äußeren Mantel umgeben ist. Die Mäntel wirken einem Verschleiß der Rollen bzw. des Elastomermaterials entgegen, da einerseits der innere Mantel eine reibungsarme Drehung der Rolle um einen Achsbolzen oder eine Drehachse ermöglicht und andererseits der äußere Mantel einen unmittelbaren Verschleiß des Elastomermaterials aufgrund von auftretender Reibung mit dem Kopf des Einrastelements verhindert. Vorzugsweise weisen die Mäntel metallisches Material auf. Somit weist der Mittelteil der Rolle im Wesentlichen eine Hohlzylinder-Form auf.

In einer weiteren Ausführungsform ist ein Distanzstück vorgesehen, welches beide Achsbolzen einspannt und relativ zueinander anordnet, wobei die beiden Achsbolzen die Drehachsen der Rollen bilden. Somit werden durch das Distanzstück die beiden Achsbolzen ortsfest relativ zueinander gehalten, so dass das Passieren des Kopfs des einen Teils des Einrastmechanismus beim Verriegelungs- bzw. Entriegelungsvorgang zwar die äußeren Mäntel der Rollen voneinander wegbewegt werden, jedoch deren Achsbolzen fest an einem Distanzstück angeordnet sind. Insoweit erfolgt eine Deformation des Elastomermaterials einer jeden Rolle zwischen deren zwei Mäntel und somit auch bezüglich eines ortsfest angeordneten Achsbolzens, wodurch in Abhängigkeit der Materialeigenschaften des Elastomermaterials in ganz besonders vorteilhafter Weise ein Einrastmechanismus Abhängigkeit der Materialeigenschaften des Elastomermaterials in ganz besonders vorteilhafter Weise ein Einrastmechanismus mit einer größeren Verriegelungs- bzw. Entriegelungskraft zur Verfügung gestellt werden kann, als dies aus dem Stand der Technik bekannt ist. Hierdurch können mit dem erfindungsgemäßen Einrastmechanismus größere bzw. schwerere Bauelemente relativ zueinander eingerastet werden, ohne das die Bauteile des Einrastmechanismus einem hohen Verschleiß ausgesetzt sind.

Im Konkreten ist der Kopf des Einrastmechanismus in Form einer starren Stange ausgeführt, welche parallel zu den Rollen der Aufnahme angeordnet und vorzugsweise zylindrisch ausgebildet ist. Der Schaft ist in Form einer starren Platte ausgeführt, welche ein erstes Ende und ein zweites Ende aufweist, wobei das erste Ende der Platte mit dem Kopf verbunden ist und wobei das zweite Ende der Platte an einer Befestigungsplatte angebracht ist, welche an einem der beiden Bauelemente befestigt ist. Der Schaft erstreckt sich von der Befestigungsplatte durch die Aufnahmeöffnung, wenn die Bauelemente sich in der Einrastposition befinden.

Die eingangs genannte Aufgabe bezüglich eines Arbeitsgeräts wird durch die Merkmale des Patentanspruchs 5 6 gelöst. Demnach ist ein erfindungsgemäßes Arbeitsgerät dadurch gekennzeichnet, dass die Aufnahme zwei im Wesentlichen parallel angeordnete Bauteile mit elastischem Material aufweist, welche zu einer Aufnahmeöffnung einer vorgebbaren Breite voneinander separierbar sind, wobei der Kopf größer als die Breite der Aufnahmeöffnung der Aufnahme ist, wobei der Kopf breiter als der Schaft ist und wobei die beiden Bauteile des Einrastmechanismus derart miteinander zusammenwirken, dass die zwei Bauteile das Einrastelement zurückhalten, wenn der Arm sich in der Stauposition befindet, und dass die zwei Bauteile sich deformieren, wenn das Einrastelement die Aufnahmeöffnung passiert, wenn der Arm durch eine ausreichende Kraft in die Stauposition hinein oder aus der Stauposition heraus bringbar ist, was ein automatisches Einrasten und/oder Freigeben des Einrastmechanismus bewirkt.

Hierbei handelt es sich im Wesentlichen um ein Arbeitsgerät, an welchem ein Einrastmechanismus nach einem der Patentansprüche 1 bis 4 einerseits an dem Rahmen des Arbeitsfahrzeugs und andererseits an dem relativ zum Rahmen bewegbaren Arm angebracht ist, so dass zur Vermeidung von Wiederholungen auf den vorigen Teil der Beschreibung verwiesen wird.

Das Verstrebungsmittel könnte ein lineares Stellglied aufweisen, welches zum Bewegen des Arms zwischen der Arbeitsposition und der Stauposition vorgesehen ist. Hierbei ist das erste Ende des Stellglieds schwenkbar mit dem Arm und das zweite Ende des Stellglieds schwenkbar mit dem Rahmen verbunden. Vorzugsweise ist der Arm durch die Kraft des Stellglieds in die Stauposition hinein oder aus der Stauposition heraus bringbar. Das lineare Stellglied könnte einen hydraulischen Zylinder aufweisen.

Alternativ hierzu könnte das Verstrebungsmittel eine Verstrebung aufweisen, welche zum Abspreizen des Arms in einer Arbeitsposition vorgesehen ist, wenn der Arm sich in der Arbeitsposition befindet. In dieser Ausführungsform könnte es sich bei der Verstrebung um eine Stange handeln, die an ihren beiden Enden entsprechende Befestigungsmittel zum Befestigen einerseits am Rahmen und andererseits am Arm des Arbeitsfahrzeugs aufweist. Die Stange könnte manuell angebracht werden.

Weitere vorteilhafte Ausgestaltungen und Weiterbildungen der Erfindung gehen aus den abhängigen Patentansprüchen hervor.
Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt jeweils in einer schematischen Darstellung:
- Fig. 1: eine rückwärtige perspektivische Ansicht eines Tieflöffelbaggers,
- Fig. 2: eine perspektivische Ansicht des Rahmens, des Stabilisatorarms und dessen Einrastmechanismus in einem nicht eingerasteten Zustand,
- Fig. 2a: eine vergrößerte Teilansicht des Einrastmechanismus aus Fig. 2,
- Fig. 3: eine Schnittansicht des Rahmens, des Stabilisatorarms und des Einrastmechanismus, wobei der Einrastmechanismus in einem einrastenden und in einem freigebenden Zustand gezeigt ist,
- Fig. 4: eine Schnittansicht des Rahmens, des Stabilisatorarms und des Einrastmechanismus im eingerasteten Zustand und
- Fig. 5: in einer rückwärtigen perspektivischen Ansicht eines Tieflöffelbaggers, welcher feste Verstrebungen aufweist, mit welchem die Stabilisatorarme abgespreizt sind.

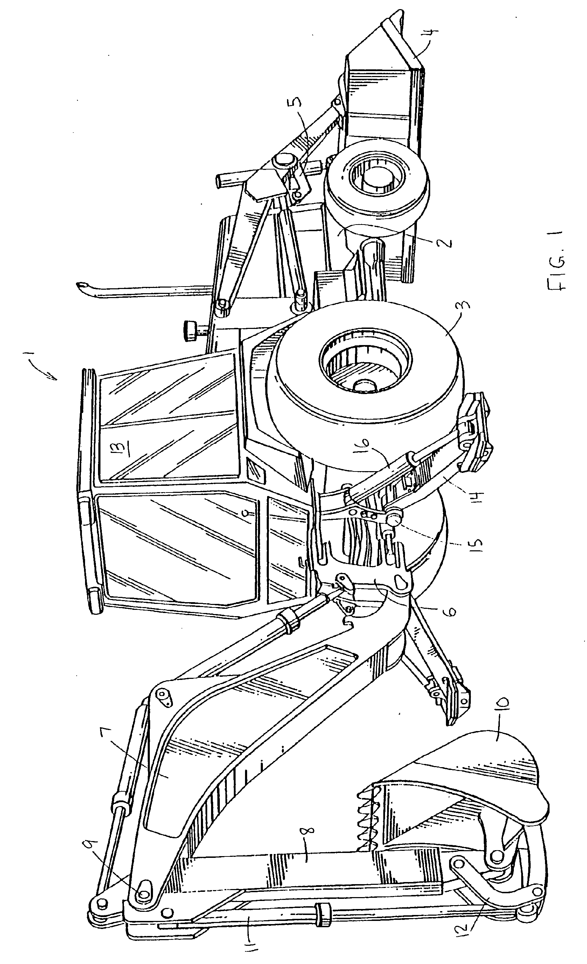

Fig. 1 zeigt eine Arbeitsmaschine, die in Form eines Tieflöffelbaggers 1 ausgeführt ist. Der Tieflöffelbagger 1 umfasst einen Rahmen 2, an dem mit dem Boden verbundene Räder 3 angebracht sind. Die Räder 3 tragen den Rahmen 2 und dienen zur Fortbewegung. Ein Tieflöffelbagger 1 umfasst eine an einem Baggerschaufelgestänge 5 angebrachte Baggerschaufel 4, mit welchem die Baggerschaufel 4 relativ zum Rahmen 2 bewegt werden kann. An der Rückseite des Rahmens 2 ist ein schwenkbarer Rahmen 6 angebracht. Ein Tiefschaufelarmabschnitt 7 ist drehbar bzw. schwenkbar mit dem schwenkbaren Rahmen 6 verbundenen. Ein weiterer Tiefschaufelarmabschnitt 8 ist drehbar bzw. schwenkbar mit dem Arm 7 am Drehgelenk 9 verbunden. Eine Tieflöffelschaufel 10 ist drehbar bzw. schwenkbar mit dem Tiefschaufelarmabschnitt 8 verbunden. Mit einem hydraulischen Zylinder 11 kann die Tieflöffelschaufel 10 über ein Schaufelgestänge 12 bewegt werden. Ein Bediener bedient die Arbeitsmaschine von einer Bedienerstation 13 aus.

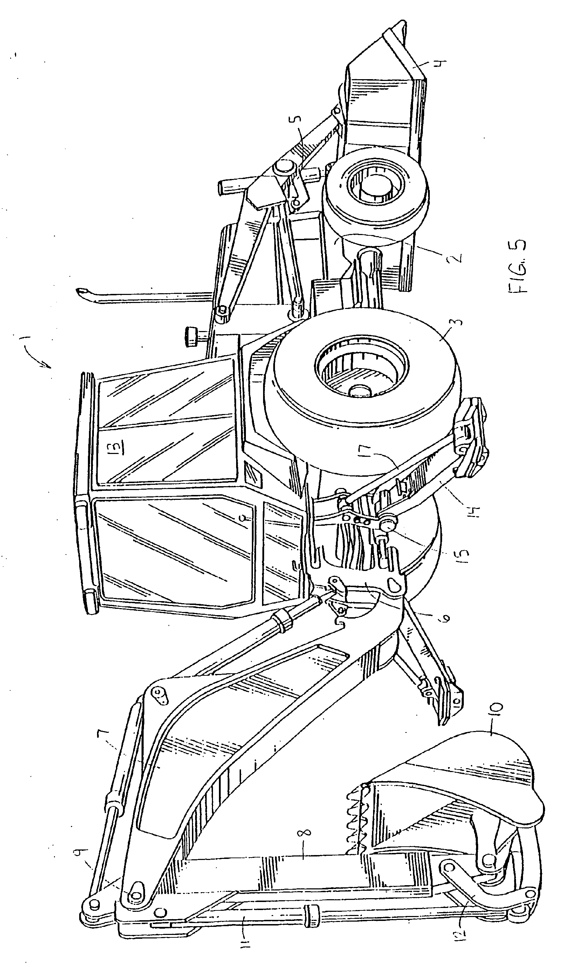

Der Tieflöffelbagger 1 umfasst zwei zur Stabilisierung des Tieflöffelbaggers dienende Arme 14, welche sich auf dem Boden abstützen und den Tieflöffelbagger 1 im Betrieb stabilisieren. Der Arm 14 - im Folgenden Stabilisatorarm 14 genannt - ist am Rahmen 2 über ein Drehgelenk 15 mit einer horizontal angeordneten Drehachse angelenkt. Üblicherweise spreizt ein lineares Stellglied 16 einen Stabilisatorarm 14 in seine Arbeitsposition und bewegt ihn zwischen der Arbeitsposition und der Stauposition. Das lineare Stellglied 16 ist typischerweise in Form eines hydraulischen Zylinders ausgebildet, es könnte jedoch auch in Form einer Hebeschraube oder einer anderen Einheit ausgebildet sein, die geeignet ist, eine lineare Bewegung auszuführen. In einem alternativen Ausführungsbeispiel spreizt anstelle des linearen Stellglieds 16 eine Verstrebung 17 den Stabilisatorarm 14 in der Arbeitsposition. Der Stabilisatorarm 14 wird in diesem Fall zwischen der Arbeitsposition und der Stauposition manuell bewegt. Dies ist in Fig. 5 gezeigt, wo Verstrebungen 17 die Stabilisatorarme 14 spreizen.

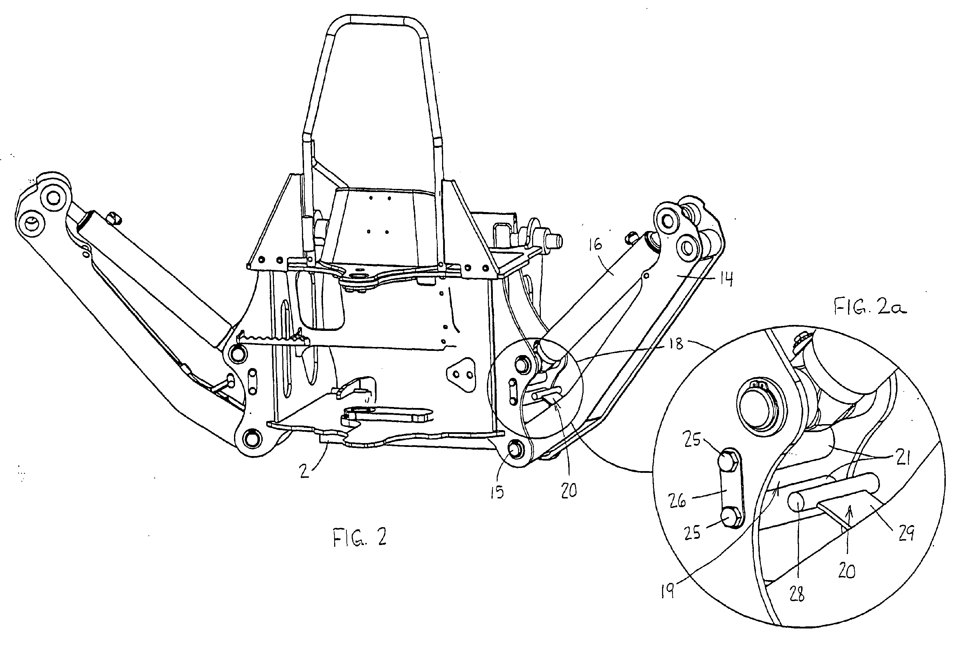

Üblicherweise wird der Stabilisatorarm 14 eines Tieflöffelbaggers 1 in der Stauposition lediglich mit Hilfe des linearen Stellglieds 16 gehalten. Da jedoch die Gravitationskraft gegen das lineare Stellglied 16 wirkt, kann der Stabilisatorarm 14 schrittweise absenken. Ein solches Absenken des Stabilisatorarms 14, welcher sich in der Stauposition befindet, ist nicht erwünscht. In Anwendungen, bei denen eine Verstrebung 17 anstelle eines linearen Stellglieds 16 verwendet wird, muss der Stabilisatorarm 14 mit Hilfe anderer Mittel in der Stauposition gehalten werden, so beispielsweise durch manuell betätigbare Verriegelungen und Entriegelungen. Die Fig. 2 und 2a zeigen einen erfindungsgemäßen Einrastmechanismus 18, mit welchem ein Stabilisatorarm 14 in einer Stauposition automatisch verriegelt bzw. aus der Stauposition automatisch entriegelt werden kann.

Der Einrastmechanismus 18 umfasst einen ersten Teil 19 und einen zweiten Teil 20. Der erste Teil 19 ist am Rahmen 2 des Arbeitsgeräts befestigt, der zweite Teil 20 ist am Stabilisatorarm 14 befestigt. Der erste Teil 19 des Einrastmechanismus 18 ist eine Aufnahme, welche zwei parallel angeordnete Rollen 21 mit einem federnden bzw. elastischen Material umfasst.

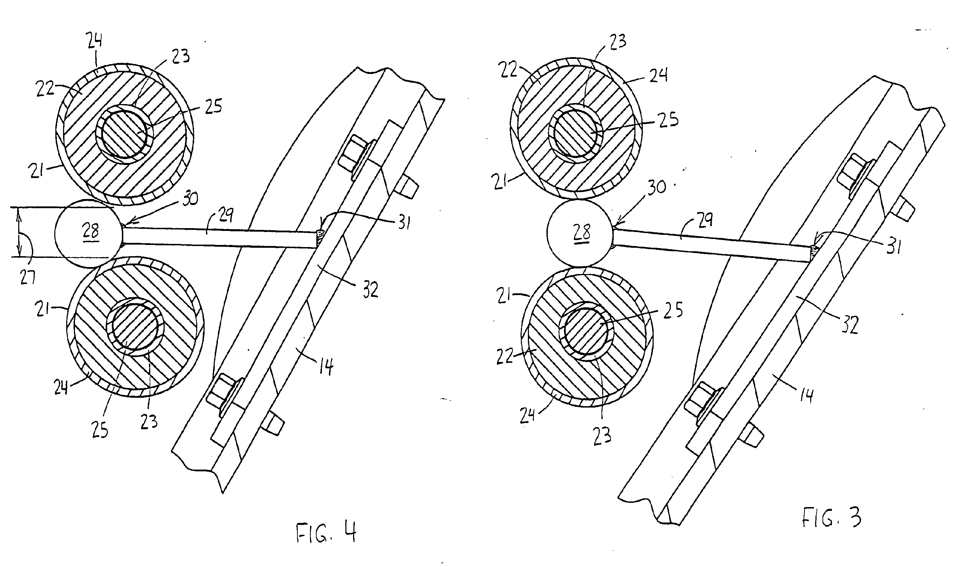

In dem beschriebenen Ausführungsbeispiel umfasst jede Rolle 21 einen Mittelteil 22 eines Elastomermaterials, welches von inneren und von äußeren Mänteln 23, 24 aus metallischen Material umgeben ist, um einem Verschleiß entgegenzuwirken. Dies ist in den Fig. 3 und 4 gezeigt. Jede Rolle 21 ist um eine Drehachse drehbar an dem Rahmen 2 der Arbeitsmaschine befestigt. Ein Distanzstück 26 spannt beide Achsbolzen 25 ein und ordnet sie relativ zueinander an, um den Separationsabstand zwischen den Oberflächen der Rollen 21 vorzugeben und um eine gewünschte Breite der Aufnahmeöffnung 27 einzuhalten. Die Achsbolzen 25 bilden die Drehachsen der Rollen 21.

Der zweite Teil des Einrastmechanismus 18 ist in Form eines Einrastelements ausgebildet und umfasst einen Kopf 28 und einen Schaft 29. Die Breite des Kopfs 28 ist in senkrechter Richtung zu den Drehachsen und die beiden Drehachsen verbindend größer als die Breite der Aufnahmeöffnung 27 ausgebildet. Die Breite des Schafts 29 ist in dieser Richtung kleiner als die Breite des Kopfs 28 ausgebildet. In dem hier beschriebenen Ausführungsbeispiel ist der Kopf 28 in Form einer starren Stange ausgeführt, welcher parallel zu den Rollen 21 angeordnet ist. Der Schaft 29 ist in Form einer starren Platte ausgeführt, welche ein erstes Ende 30 und ein zweites Ende 31 aufweist. Das erste Ende 30 der Platte ist mit einer Seite des Kopfs 28 verbunden, das zweite Ende 31 der Platte ist an einer Befestigungsplatte 32 angebracht, welche am Stabilisatorarm 14 befestigt ist. Der Schaft 29 erstreckt sich von der Befestigungsplatte 32 durch die Aufnahmeöffnung 27 hindurch, wenn der Stabilisatorarm 14 sich in der Stauposition befindet, beispielsweise wie in Fig. 4 gezeigt.

Im Betrieb bewegt sich der Stabilisatorarm 14 in die Stauposition hinein und aus der Stauposition heraus entweder aufgrund eines linearen Stellglieds 16 oder einer manueller Betätigung. Wenn der Stabilisatorarm 14 in der Stauposition ankommt greift der zweite Teil 20 des Einrastmechanismus 18 in den ersten Teil 19 des Einrastmechanismus 18 ein. Die Kraft zur Bewegung des Stabilisatorarms 14 ist ausreichend, um mit dem Kopf 28, welcher größer als die Breite der Aufnahmeöffnung 27 ausgebildet ist, die Rollen 21 der Aufnahme zu deformieren, während der Kopf 28 durch die Aufnahmeöffnung 27 gezwungen wird. Die Deformation der Rollen 21 ermöglicht es, den Kopf 28 durch die Aufnahmeöffnung 27 passieren zu lassen, um eine automatische Verriegelung bzw. Entriegelung des Einrastmechanismus 18 zur Verfügung zu stellen. In Fig. 3 ist gezeigt, wie die zwei parallel angeordnete Rollen 21 deformiert werden, während der zweite Teil 20 des Einrastmechanismus 18 sich durch die Aufnahmeöffnung 27 bewegt, wenn der Arm 14 aufgrund der Kraft des Hydraulikzylinders 16 in die Stauposition hinein bzw. aus der Stauposition heraus bewegt wird.

Nachdem der Kopf 28 die Aufnahmeöffnung passiert hat, kehren die Aufnahmerollen 21 in ihre ursprüngliche Form bzw. Position zurück. Wenn der Stabilisatorarm 14 sich in der Stauposition befindet und der Einrastmechanismus 18 verriegelt ist, ist die auf den Stabilisatorarm 14 wirkende Gravitations- oder Trägheitskraft nicht ausreichend, um die Aufnahmerollen 21 durch den zweiten Teil 20 des Einrastmechanismus 18 zu deformieren. Der größer als die Aufnahmeöffnung 27 ausgebildete Kopf 28 wird am Passieren der Aufnahmeöffnung 27 gehindert, wodurch der Stabilisatorarm 14 in der Stauposition verbleibt. Fig. 4 zeigt die Wechselwirkung des ersten Teils 19 des Einrastmechanismus 18 mit dem zweiten Teil 20 des Einrastmechanismus 18, wodurch die zwei parallel angeordneten Rollen 21 der Aufnahme den zweiten Teil 20 des Einrastmechanismus 18 zurückhalten, wenn der Stabilisatorarm 14 sich in der Stauposition befindet.

Einrastmechanismus 18 zurückhalten, wenn der Stabilisatorarm 14 sich in der Stauposition befindet.

Auch wenn die Erfindung anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter den Schutzbereich der Patentansprüche fallen.

## Patentansprüche

1. Einrastmechanismus zum Einrasten zweier relativ zueinander bewegbarer Bauelemente (2, 14), welche vorzugsweise in Form einer Dreh- oder Schwenkbewegung relativ zueinander bewegbar sind, mit einem ersten Teil (19) und einem zweiten Teil (20), wobei einer der beiden Teile (19, 20) mit dem einen Bauelement (2) und ein anderer der beiden Teile (19, 20) mit dem anderen Bauelement (14) verbunden ist, wobei der erste Teil (19) eine Aufnahme aufweist und wobei der zweite Teil (20) ein Einrastelement mit einem Kopf (28) und einem Schaft (29) aufweist, wobei die Aufnahme zwei im Wesentlichen parallel angeordnete Bauteile (21) mit elastischem Material aufweist, welche zu einer Aufnahmeöffnung (27) einer vorgebbaren Breite voneinander separierbar sind, wobei der Kopf (28) größer als die Breite der Aufnahmeöffnung (27) der Aufnahme ist, wobei der Kopf (28) breiter als der Schaft (29) ist und wobei die zwei Bauteile (21) des Einrastmechanismus (18) derart miteinander zusammenwirken, dass die zwei Bauteile (21) das Einrastelement zurückhalten, wenn die Bauelemente (2, 14) sich in der Einrastposition befinden, und dass die zwei Bauteile (21) sich deformieren, wenn das Einrastelement die Aufnahmeöffnung (27) passiert, wenn die Bauelemente (2, 14) durch eine ausreichende Kraft in die Einrastposition hinein oder aus der Einrastposition heraus bringbar sind, was ein automatisches Einrasten und/oder Freigeben des Einrastmechanismus (18) bewirkt, **dadurch gekennzeichnet, dass** der Kopf (28) des Einrastmechanismus (18) in Form einer starren Stange ausgeführt ist, welche parallel zu den Rollen der Aufnahme angeordnet ist, wobei der Schaft (29) in Form einer starren Platte ausgeführt ist, welche ein erstes Ende (30) und ein zweites Ende (31) aufweist, wobei das erste Ende (30) der Platte mit dem Kopf (28) verbunden ist und wobei das zweite Ende (31) der Platte an einer Befestigungsplatte (32) angebracht ist, welche an einem der beiden Bauelemente (14) befestigt ist, wobei der Schaft (29) sich von der Befestigungsplatte (32) durch die Aufnahmeöffnung (27) erstreckt, wenn die Bauelemente (2, 14) sich in der Einrastposition befinden.

2. Einrastmechanismus nach Anspruch 1, **dadurch gekennzeichnet, dass** die beiden Bauteile (21) jeweils durch Rollen gebildet sind, welche drehbar bzw. rotierbar um eine Drehachse angeordnet sind, welche vorzugsweise in Form eines Achsbolzens (25) ausgeführt ist.

3. Einrastmechanismus nach Anspruch 1 oder 2, **dadurch gekennzeichnet, dass** die Rolle ein Mittelteil (22) aus einem Elastomermaterial aufweist, welches von mindestens einem inneren und von mindestens einem äußeren Mantel (23, 24) - welche vorzugsweise metallisches Material aufweisen - umgeben ist, wobei die Mäntel (23, 24) einem Verschleiß entgegenwirken.

4. Einrastmechanismus nach Anspruch 2 oder 3, **dadurch gekennzeichnet, dass** ein Distanzstück (26) vorgesehen ist, welches beide Achsbolzen (25) einspannt und relativ zueinander anordnet, wobei die beiden Achsbolzen (25) die Drehachsen der Rollen bilden.

5. Arbeitsfahrzeug mit einem Rahmen (2), einem Arm (14), einem Verstrebungsmittel (16, 17) und einem Einrastmechanismus (18) nach einem der Ansprüche 1 bis 4, wobei der Arm (14) zur Verrichtung einer Arbeitsfunktion vorgesehen ist, wobei der Arm (14) ein erstes Ende und ein zweites Ende aufweist und das erste Ende des Arms schwenkbar an dem Rahmen (2) befestigt ist, wobei der Arm (14) in eine Arbeitsposition und eine Stauposition verbringbar ist, wobei das Verstrebungsmittel (16, 17) zum Abspreizen des Arms (14) in eine Arbeitsposition vorgesehen ist, wobei das Verstrebungsmittel (16, 17) ein erstes und ein zweites Ende aufweist, wobei das erste Ende des Verstrebungsmittels (16, 17) mit dem Arm (14) und das zweite Ende des Verstrebungsmittels (16, 17) mit dem Rahmen (2) verbindbar ist, wobei der Einrastmechanismus (18) zum Festhalten des Arms (14) in der Stauposition vorgesehen ist.

6. Arbeitsfahrzeug nach Anspruch 5, **dadurch gekennzeichnet, dass** das Verstrebungsmittel ein lineares Stellglied (16) aufweist, welches zum Bewegen des Arms (14) zwischen der Arbeitsposition und der Stauposition vorgesehen ist, wobei das erste Ende des Stellglieds (16) schwenkbar mit dem Arm (14) und das zweite Ende des Stellglieds (16) schwenkbar mit dem Rahmen (2) verbunden ist, wobei vorzugsweise der Arm (14) durch die Kraft des Stellglieds (16) in die Stauposition hinein oder aus der Stauposition heraus bringbar ist.

7. Arbeitsfahrzeug nach Anspruch 5, **dadurch gekennzeichnet, dass** das Verstrebungsmittel eine Verstrebung (17) aufweist, welche zum Abspreizen des Arms (14) in einer Arbeitsposition vorgesehen ist, wenn der Arm (14) sich in der Arbeitsposition befindet.

8. Arbeitsfahrzeug nach einem der Ansprüche 5 bis 7, **dadurch gekennzeichnet, dass** die zwei parallel zueinander angeordneten Bauteile (21) der Aufnahme des Einrastmechanismus (18) Rollen aufweisen, die jeweils um eine Rollachse (25) drehbar bzw. rotierbar sind.

9. Arbeitsfahrzeug nach Anspruch 8, **dadurch gekennzeichnet, dass** eine Rolle ein Mittelteil (22) aus einem Elastomermaterial aufweist, welches von inneren und von äußeren Mänteln (23, 24) aus metallischen Material umgeben ist, wobei die Mäntel (23, 24) einem Verschleiß entgegenwirken.

10. Arbeitsfahrzeug nach Anspruch 8 oder 9, **dadurch gekennzeichnet, dass** ein Distanzstück (26) vorgesehen ist, welches beide Achsbolzen (25) einspannt und relativ zueinander anordnet, wobei die beiden Achsbolzen (25) die Drehachsen der Rollen bilden.

11. Arbeitsfahrzeug nach einem der Ansprüche 8 bis 10, **dadurch gekennzeichnet, dass** der Kopf (28) des Einrastmechanismus (18) in Form einer starren Stange ausgeführt ist, welche parallel zu den Rollen der Aufnahme angeordnet ist, wobei der Schaft (29) in Form einer starren Platte ausgeführt ist, welche ein erstes Ende (30) und ein zweites Ende (31) aufweist, wobei das erste Ende (30) der Platte mit einer Seite des Kopfs (28) verbunden ist und wobei das zweite Ende (31) der Platte an einer Befestigungsplatte (32) angebracht ist, welche am Stabilisatorarm (14) befestigt ist, wobei der Schaft (29) sich von der Befestigungsplatte (32) durch die Aufnahmeöffnung (27) erstreckt, wenn der Stabilisatorarm (14) sich in der Stauposition befindet.

12. Arbeitsfahrzeug nach einem der Ansprüche 5 bis 11, **dadurch gekennzeichnet, dass** der Arm (14) in der Stauposition im Wesentlichen vertikal angeordnet ist.

13. Arbeitsfahrzeug nach einem der Ansprüche 5 bis 12, **dadurch gekennzeichnet, dass** der Arm (14) einen Stabilisatorarm aufweist.

14. Arbeitsfahrzeug nach einem der Ansprüche 5 bis 13, **dadurch gekennzeichnet, dass** ein erster Teil (19) des Einrastmechanismus (18) am Rahmen (2) und ein zweiter Teil (20) und des Einrastmechanismus (18) am Arm (14) angebracht ist.

15. Arbeitsfahrzeug nach einem der Ansprüche 5 bis 14, wobei das Verstrebungsmittel ein lineares Stellglied (16) aufweist, **dadurch gekennzeichnet, dass** das lineare Stellglied (16) einen hydraulischen Zylinder aufweist.

16. Arbeitsfahrzeug nach einem der Ansprüche 5 bis 15, **dadurch gekennzeichnet, dass** das Arbeitsfahrzeug (1) in Form eines Tieflöffelbaggers ausgebildet ist.

17. Arbeitsfahrzeug nach einem der Ansprüche 5 bis 16, **dadurch gekennzeichnet, dass** die beiden Bauteile (21) des Einrastmechanismus (18) jeweils durch Rollen gebildet sind, welche jeweils um einen Achsbolzen (25) dreh- bzw. rotierbar angeordnet sind.

## Claims

1. Locking mechanism for locking two structural elements (2, 14) capable of moving relative to one another, which are capable of moving relative to one another preferably in the form of a rotating or pivoting movement, having a first part (19) and a second part (20), one of the two parts (19, 20) being attached to one structural element (2), and another of the two parts (19, 20) being attached to the other structural element (14), the first part (19) exhibiting a holder and the second part (20) exhibiting a locking element with a head (28) and a shaft (29), the holder exhibiting two parts (21) with elastic material arranged essentially parallel, which parts are capable of being separated from one another to produce a receiving opening (27) with a predefined width, the head (28) being greater in size than the width of the receiving opening (27) of the holder, the head (28) being wider than the shaft(29), and the two parts (21) of the locking mechanism (18) interacting with one another in such a way that the two parts (21) retain the locking element when the structural elements (2, 14) are present in the locking position, and that the two parts (21) are deformed when the locking element passes the receiving opening (27), when the structural elements (2, 14) are capable of being brought into the locked position or of being brought out of the locked position by the application of adequate force, which causes the automatic locking and/or release of the locking mechanism (18), **characterized in that** the head (28) of the locking mechanism (18) is configured in the form of a rigid bar, which is arranged parallel to the rollers of the holder, the shaft (29) being configured in the form of a rigid plate, which exhibits a first end (30) and a second end (31), the first end (30) of the plate being attached to the head (28) and the second end (31) of the plate being positioned on a securing plate (32), which is secured to one of the two structural elements (14), the shaft (29) extending from the securing plate (32) through the holder opening (27) when the structural elements (2, 14) are in the locked position.

2. Locking mechanism according to Claim 1, **characterized in that** the two parts (21) are each constituted by rollers, which are so arranged as to be capable of turning or rotating about a rotational axis, which is preferably configured in the form of an axial bolt (25).

3. Locking mechanism according to Claim 1 or 2, **characterized in that** the roller exhibits a middle part (22) made of an elastomer material, which is enclosed by at least one inner and by at least one outer envelope (23, 24), which preferably exhibit metallic material, the purpose of the envelopes (23, 24) being to counteract any wear.

4. Locking mechanism according to Claim 2 or 3, **characterized in that** a distance piece (26) is provided, which clamps both axial bolts (25) and arranges them relative to one another, the two axial bolts (25) forming the rotational axes of the rollers.

5. Working vehicle having a chassis frame (2), an arm (14), a bracing means (16, 17) and a locking mechanism (18) according to one of Claims 1 to 4, the arm (14) being provided for the performance of a work function, the arm (14) exhibiting a first end and a second end, and the first end of the arm being attached in a pivoting manner to the chassis frame (2), the arm (14) being capable of being brought into a working position and a stowed position, the bracing means (16, 17) being provided for deploying the arm (14) in a working position, the bracing means (16, 17) exhibiting a first and a second end, the first end of the bracing means (16, 17) being capable of attachment to the arm (14), and the second end of the bracing means (16, 17) being capable of attachment to the chassis frame (2), the locking mechanism (18) being provided for the purpose of retaining the arm (14) in the stowed position.

6. Working vehicle according to Claim 5, **characterized in that** the bracing means exhibits a linear actuator (16), which is provided for moving the arm (14) between the working position and the stowed position, the first end of the actuator (16) being attached in a pivoting manner to the arm (14) and the second end of the actuator (16) being attached in a pivoting manner to the chassis frame (2), the arm (14) being capable of being brought into the stowed position or from the stowed position preferably by the force of the actuator (16).

7. Working vehicle according to Claim 5, **characterized in that** the bracing means exhibits a brace (17), which is provided for deploying the arm (14) in a working position when the arm (14) is present in the working position.

8. Working vehicle according to Claims 5 to 7, **characterized in that** the two parts (21) of the holder for the locking mechanism (18) that are arranged parallel to one another exhibit rollers, each of which is capable of turning or rotating about a roller axis (25).

9. Working vehicle according to Claim 8, **characterized in that** a roller exhibits a middle part (22) made of an elastomer material, which part is enclosed by inner and outer envelopes (23, 24) made of a metallic material, the purpose of the envelopes (23, 24) being to counteract wear.

10. Working vehicle according to Claim 8 or 9, **characterized in that** a distance piece (26) is provided, which clamps the two axial bolts (25) and arranges them relative to one another, the two axial bolts (25) forming the rotational axes of the rollers.

11. Working vehicle according to one of Claims 8 to 10, **characterized in that** the head (28) of the locking mechanism (18) is configured in the form of a rigid bar, which is arranged parallel to the rollers of the holder, the shaft (29) being configured in the form of a rigid plate, which exhibits a first end (30) and a second end (31), the first end (30) of the plate being attached to one side of the head (28), and the second end (31) of the plate being positioned on a securing plate (32), which is secured to the stabilizer arm (14), the shaft (29) extending from the securing plate (32) through the holder opening (27) when the stabilizer arm (14) is in the stowed position.

12. Working vehicle according to one of Claims 5 to 11, **characterized in that** the arm (14) exhibits an essentially vertical orientation when in the stowed position.

13. Working vehicle according to one of Claims 5 to 12, **characterized in that** the arm (14) exhibits a stabilizer arm.

14. Working vehicle according to one of Claims 5 to 13, **characterized in that** a first part (19) of the locking mechanism (18) is positioned on the frame (2) and a second part (20) and its locking mechanism (18) is positioned on the arm (14).

15. Working vehicle according to one of Claims 5 to 14, in conjunction with which the bracing means exhibits a linear actuator (16), **characterized in that** the linear actuator (16) exhibits a hydraulic cylinder.

16. Working vehicle according to one of Claims 5 to 15, **characterized in that** the working vehicle (1) is configured in the form of a back-acter excavator.

17. Working vehicle according to one of Claims 5 to 16, **characterized in that** the two parts (21) of the locking mechanism (18) are each formed by rollers, each of which is so arranged as to be capable of turning or rotating about an axial bolt (25).

## Revendications

1. Mécanisme de verrouillage destiné à encliqueter deux éléments fonctionnels (2, 14) mobiles l'un par rapport à l'autre, lesquels sont aptes à se déplacer l'un par rapport à l'autre de préférence par un mouvement de rotation ou un mouvement de pivotement, comportant une première partie (19) et une deuxième partie (20), une des deux parties (19, 20) étant assemblée à l'un des éléments fonctionnels (2) et l'autre des deux parties (19, 20) étant assemblée à l'autre élément fonctionnel (14), la première partie (19) comportant un logement et la deuxième partie (20) comportant un élément de verrouillage avec une tête (28) et une tige (29), le logement comportant deux pièces de montage (21) en matériau élastique, qui sont sensiblement parallèles entre elles et qui peuvent être séparées l'une de l'autre pour former une ouverture de réception (27) avec une largeur prédéfinissable, la tête (28) étant plus grande que la largeur de l'ouverture de réception (27) du logement, la tête (28) étant plus large que la tige (29) et les deux pièces de montage (21) du mécanisme de verrouillage (18) coopérant entre elles de telle sorte que les deux pièces de montage (21) retiennent l'élément de verrouillage lorsque les éléments fonctionnels (2, 14) sont en position encliquetée et de telle sorte que les deux pièces de montage (21) se déforment lorsque l'élément de verrouillage franchit l'ouverture de réception (27) lorsque les éléments fonctionnels (2, 14) peuvent être amenés sous l'effet d'une force suffisante dans la position encliquetée et hors de la position encliquetée, ce qui induit un verrouillage et/ou un déverrouillage automatiques du mécanisme de verrouillage (18), **caractérisé en ce que** la tête (28) du mécanisme de verrouillage (18) est réalisée sous la forme d'une barre rigide, qui est agencée parallèlement aux rouleaux du logement, la tige (29) étant réalisée sous la forme d'une plaque rigide, qui comporte une première extrémité (30) et une deuxième extrémité (31), la première extrémité (30) de la plaque étant reliée à la tête (28) et la deuxième extrémité (31) de la plaque étant attachée à une plaque de fixation (32), qui est fixée sur l'un des deux éléments fonctionnels (14), la tige (29) s'étendant à partir de la plaque de fixation (32) à travers l'ouverture de réception (27), lorsque les éléments fonctionnels (2, 14) se situent dans la position encliquetée.

2. Mécanisme de verrouillage selon la revendication 1, **caractérisé en ce que** les deux pièces de montage (21) sont formées chacune par un rouleau, lesquels sont montés de manière à pouvoir tourner autour d'un axe de rotation, qui est réalisé de préférence sous la forme d'un boulon axial (25).

3. Mécanisme de verrouillage selon la revendication 1 ou 2, **caractérisé en ce que** le rouleau comporte une partie centrale (22) en matériau élastomère, qui est entourée par au moins une paroi latérale intérieure (23) et au moins une paroi latérale extérieure (24) - lesquelles comportent de préférence un matériau métallique -, les parois latérales (23, 24) empêchant l'usure.

4. Mécanisme de verrouillage selon la revendication 2 ou 3, **caractérisé en ce qu'**il est prévu un écarteur (26) qui entoure les deux boulons axiaux (25) et les positionne l'un par rapport à l'autre, les deux boulons axiaux (25) formant les axes de rotation des rouleaux.

5. Véhicule de travail, comportant un châssis (2), un bras (14), un moyen d'entretoisement (16, 17) et un mécanisme de verrouillage (18) selon l'une quelconque des revendications 1 à 4, le bras (14) étant prévu pour remplir une fonction de travail, le bras (14) comportant une première extrémité et une deuxième extrémité, et la première extrémité du bras étant fixée de manière pivotante contre le châssis (2), le bras (14) pouvant être amené dans une position de travail et une position d'arrêt, le moyen d'entretoisement (16, 17) étant prévu pour étayer le bras (14) dans une position de travail, le moyen d'entretoisement (16, 17) comportant une première et une deuxième extrémités, la première extrémité du moyen d'entretoisement (16, 17) étant apte à être assemblée au bras (14) et la deuxième extrémité du moyen d'entretoisement (16, 17) étant apte à être assemblée au châssis (2), le mécanisme de verrouillage (18) étant prévu pour retenir le bras (14) dans la position d'arrêt.

6. Véhicule de travail selon la revendication 5, **caractérisé en ce que** le moyen d'entretoisement comporte un actionneur (16) linéaire, qui est prévu pour déplacer le bras (14) entre la position de travail et la position d'arrêt, la première extrémité de l'actionneur (16) étant assemblée de manière pivotante au bras (14) et la deuxième extrémité de l'actionneur (16) étant assemblée de manière pivotante au châssis (2), le bras (14) pouvant être amené de préférence sous l'effet de la force de l'actionneur (16) dans la position d'arrêt ou hors de la position d'arrêt.

7. Véhicule de travail selon la revendication 5, **caractérisé en ce que** le moyen d'entretoisement comporte une entretoise (17), qui est prévue pour étayer le bras (14) dans une position de travail lorsque le bras (14) est dans la position de travail.

8. Véhicule de travail selon l'une quelconque des revendications 5 à 7, **caractérisé en ce que** les deux pièces de montage (21), parallèles l'une à l'autre, dans le logement du mécanisme de verrouillage (18) comportent des rouleaux, qui sont aptes chacun à tourner autour d'un axe de rouleau (25).

9. Véhicule de travail selon la revendication 8, **caractérisé en ce qu'**un rouleau comporte une partie centrale (22) en matériau élastomère, qui est entourée par des parois latérales intérieure et extérieure (23, 24) en matériau métallique, les parois latérales (23, 24) empêchant l'usure.

10. Véhicule de travail selon la revendication 8 ou 9, **caractérisé en ce qu'**il est prévu un écarteur (26), qui entoure les deux boulons axiaux (25) et les positionne l'un par rapport à l'autre, les deux boulons axiaux (25) formant les axes de rotation des rouleaux.

11. Véhicule de travail selon l'une quelconque des revendications 8 à 10, **caractérisé en ce que** la tête (28) du mécanisme de verrouillage (18) est réalisée sous la forme d'une barre rigide, qui est agencée parallèlement aux rouleaux du logement, la tige (29) étant réalisée sous la forme d'une plaque rigide, qui comporte une première extrémité (30) et une deuxième extrémité (31), la première extrémité (30) de la plaque étant assemblée à un côté de la tête (28) et la deuxième extrémité (31) de la plaque étant attachée à une plaque de fixation (32), qui est fixée sur le bras de stabilisation (14), la tige (29) s'étendant à partir de la plaque de fixation (32) à travers l'ouverture de réception (27), lorsque le bras de stabilisation (14) est dans la position d'arrêt.

12. Véhicule de travail selon l'une quelconque des revendications 5 à 11, **caractérisé en ce que** le bras (14) dans la position d'arrêt est disposé sensiblement verticalement.

13. Véhicule de travail selon l'une quelconque des revendications 5 à 12, **caractérisé en ce que** le bras (14) comporte un bras de stabilisation.

14. Véhicule de travail selon l'une quelconque des revendications 5 à 13, **caractérisé en ce qu'**une première partie (19) du mécanisme de verrouillage (18) est montée sur le châssis (2) et une deuxième partie (20) du mécanisme de verrouillage (18) est montée sur le bras (14).

15. Véhicule de travail selon l'une quelconque des revendications 5 à 14, dans lequel le moyen d'entretoisement comporte un actionneur (16) linéaire, **caractérisé en ce que** l'actionneur (16) est un vérin hydraulique.

16. Véhicule de travail selon l'une quelconque des revendications 5 à 15, **caractérisé en ce que** le véhicule de travail (1) est réalisé sous la forme d'un tracto-pelle.

17. Véhicule de travail selon l'une quelconque des revendications 5 à 16, **caractérisé en ce que** les deux pièces de montage (21) du mécanisme de verrouillage (18) sont formées chacune par des rouleaux, qui sont agencés chacun de manière à pouvoir tourner autour d'un boulon axial (25).
